# EUROPÄISCHE PATENTSCHRIFT

(11) **EP 0 417 564 B1**
(45) Veröffentlichungstag und Bekanntmachung des Hinweises auf die Patenterteilung: **21.06.1995**
(21) Anmeldenummer: 90116710.6
(22) Anmeldetag: 31.08.1990
(51) Int. Cl.: C08F 246/00, C08F 224/00, C08F 228/06, C08F 226/06, C09J 157/10

(54) **UV-vernetzbare Copolymerisate**
UV-curable copolymers
Copolymères réticulables par UV

(30) Priorität: 09.09.1989 DE 3930097
(43) Veröffentlichungstag der Anmeldung: 20.03.1991
(73) Patentinhaber: BASF Aktiengesellschaft, 67063 Ludwigshafen (DE)
(72) Erfinder: Rehmer, Gerd, Dr., D-6711 Beindersheim (DE); Auchter, Gerhard, Dr., D-6702 Bad Duerkheim (DE); Boettcher, Andreas, Dr., D-6907 Nussloch (DE); Franz, Lothar, Dr., D-6704 Mutterstadt (DE); Jaeger, Helmut, D-6719 Bobenheim (DE)

(56) Entgegenhaltungen:
- EP-A- 0 095 182
- EP-A- 0 246 848
- EP-A- 0 346 788
- US-A- 3 429 852

## Beschreibung

Die Erfindung betrifft UV-vernetzbare Copolymerisate auf der Basis von cyclischen olefinisch ungesättigten ringöffnend polymerisierenden Monomeren, die bevorzugt in lösemittelfreier Form, z.B. als Schmelzen zum Beschichten von flächigen Substraten und/oder Formkörpern aus Metall, Kunststoff, Papier, Pappe, Leder und/oder anorganischen Materialien verwendet werden und die großenteils Haftklebeeigenschaften haben.

Haftkleber werden in großem Umfang zum Verkleben gebraucht. Auch heute noch werden vielfach Haftklebstofflösungen verwendet. Bei dieser Produktgruppe sind die Lösungsmittel wichtige Hilfsstoffe, um die Polymeren in einen verarbeitungsfähigen Zustand zu bringen. Der flüssige Aggregatzustand hat zudem noch die weitere wichtige Funktion der Benetzung der Substratoberfläche, die für die Haftung (Adhäsion) eine wichtige Voraussetzung ist. Die Lösemittel können aliphatischer oder aromatischer Natur sein, wie Toluol, Aceton, Chloroform, Essigsäureethylester oder dgl. Sie müssen nach dem Aufbringen der Haftkleberlösung auf das jeweilige Substrat abgedampft werden, so daß im allgemeinen eine Lösemittelrückgewinnungsanlage für die Lösemittel erforderlich ist, da sonst eine starke Umweltbelastung durch Lösemitteldämpfe erfolgt.

Derartige Nachteile werden beim Einsatz von wäßrigen Haftkleberdispersionen zwar vermieden, doch erfordert das Trocknen von wäßrigen Zubereitungen große Energiemengen und ermöglicht insbesondere bei hohen Klebstoffdicken nur verhältnismäßig kleine Fertigungsgeschwindigkeiten.

Der vorteilhafteste Weg zum Aufbringen von Haftklebern ist das Aufbringen einer Schmelze des Klebers, da hierbei keine Lösemittel abgetrennt werden müssen.

Seit langem sind lösemittelfreie Schmelzklebstoffmassen (s. z.B. US-A-3 229 478) und seit jüngerer Zeit auch lösemittelfreie Klebstoffmassen bekannt. Hierbei handelt es sich um sogenannte "Ein- und Mehrtopf"-Systeme.

Ein Nachteil der bekannten nichtreaktiven Schmelzhaftklebstoffe ist die geringe Wärmestandfestigkeit der mit ihnen durchgeführten Verklebungen sowie ihre Oxidationsempfindlichkeit insbesondere bei höheren Temperaturen. Aufgrund ihres thermoplastischen Charakters müssen Schmelzhaftklebemassen, um eine ausreichende Wärmestandfestigkeit der mit ihnen durchgeführten Verklebungen zu gewährleisten, hohen Verarbeitungstemperaturen von ca. 180°C bis 270°C ausgesetzt werden. Bei niedrigeren Temperaturen verarbeitbare Massen besitzen meist keine hohen Wärmestandfestigkeiten.

Als Haftklebstoffe werden dabei z.B. Blockcopolymerisate aus Styrol und Isopren oder Butadien eingesetzt, wie sie beispielsweise in der US-A-3 229 478 beschrieben sind. Schmelzklebstoffe dieser Art erfordern jedoch Temperaturen von meist über 180°C, um beim Beschichtungsvorgang ausreichend fließfähig zu sein. Hinzu kommt eine geringe Beständigkeit dieser Polymerisate gegen Luftsauerstoff, Hitze, Licht und Lösungsmittel.

Abhilfe bringen reaktive Schmelzhaftklebemassen, die nach der Applikation z.B. durch Einwirkung von Luftfeuchtigkeit aktiviert werden und vernetzen. Dies erfordert jedoch unter Umständen längere Wartezeiten und die überwachung der Luftfeuchte.

Reaktive Eintopfsysteme, bei denen z.B. durch Zuführen von Wärme ein Blockierungsmittel freigesetzt wird, haben eine begrenzte, häufig nur sehr geringe Lagerstabilität.

Bei Mehrkomponenten-Systemen müssen vor der Verarbeitung die Reaktivkomponenten homogen vermischt werden. Ihre begrenzte "offene Zeit" innerhalb derer sie appliziert werden müssen, bereitet aber häufig Probleme, insbesondere bei Maschinenstillstand.

Seit langem sind auch polymerisierbare Beschichtungsmassen und Lacke bekannt, die mittels ionisierender Strahlen wie Elektronen- oder UV-Strahlen härtbar sind. Solche Produkte enthalten in der Regel olefinisch unge-sättigte Monomere, olefinisch ungesättigte Oligomere und/oder Polymere und sogenannte Photoinitiatoren sowie gegebenenfalls synergistisch wirkende Verbindungen. Sie müssen gegen eine vorzeitige, die Lagerstabilität herabsetzende Polymerisation stabilisiert werden, mit dem Nachteil, daß ihre Gesamtreaktivität reduziert wird. Außerdem darf auch die Zuführung thermischer Energie zur Viskositätsregulierung nicht zu einer vorzeitigen Reaktion führen.

Die Viskositätseinstellung kann nämlich entweder durch Einstellung einer bestimmten Temperatur oder durch Zugabe von Monomeren vorgenommen werden; dabei ist von Nachteil, daß die Monomeren oft Reizeigenschaften haben, d.h. physiologisch nicht unbedenklich sind.

Gute Haftklebereigenschaften werden zudem nur dann erzielt, wenn die Bestrahlung unter Inertgasatmosphäre erfolgt.

Auf die geschilderte Problematik wird z.B. in der DE-A-36 41 436 näher eingegangen.

Ein gangbarer Weg, lösemittelfreie, durch UV-Strahlen vernetzbare Bindemittel herzustellen, ist die Doppelbindungsfunktionalisierung von geeignet reaktiven Oligomeren oder Polymeren.

So werden in EP-A-0 207 257 strahlenhärtbare Bindemittel auf der Basis von (meth)acrylfunktionellen Polyestern beschrieben. In der EP-A-0 208 856 werden Haftklebstoffe auf der Basis von strahlenhärtbaren, (meth)acrylgruppenhaltigen Polyestern beschrieben. Nachteilig ist jedoch, daß für die Funktionalisierung polymeranaloge Reaktionen durchgeführt werden müssen.

Ein weiterer Nachteil dieser Stoffe ist darin zu sehen, daß für die UV-Härtung ein Photoinitiator zugemischt werden muß, wodurch die Migration von Photospaltprodukten nach der Härtung möglich ist; auf diese Problematik wird in der DE-OS 36 41 436, S. 4, Z. 24 ff hingewiesen.

Für die mechanische Verarbeitbarkeit hochschmelzender Massen ist ihr Verhalten bei der Applikation mit verschiedenen Auftragsaggregaten, wie Düsen, Rakeln, Walzen usw. wichtig. Insbesondere beim Düsenauftrag werden Schmelzmassen verlangt, die z.B. nicht zur "Spinnwebenbildung" beim Auftrag neigen.

Es besteht daher ein Bedarf an UV-vernetzbaren Massen, insbesondere UV-vernetzbaren Schmelzhaftklebemassen, die die genannten Nachteile der bekannten Massen nicht aufweisen; sie sollen insbesondere an der Luft vernetzt werden können, eine hohe Reaktivität gegenüber UV-Strahlen haben, weitestgehend frei von Lösungsmitteln und ungesättigten Monomeren sowie geruchsarm sein, sich möglichst wenig verfärben, bei Temperaturen unter 120°C eine ausreichend geringe Schmelzviskosität aufweisen und im vernetzten Zustand eine hohe Klebrigkeit (Tack), eine hohe Scherstandfestigkeit (Kohäsion), besonders auch in der Wärme, und eine hohe Schälfestigkeit zeigen.

Diese Aufgabe wird erfindungsgemäß gelöst durch UV-vernetzbare Copoylmerisate, die aufgebaut sind aus
A) 50-95,5 Gew.-% Estern der (Meth)acrylsäure mit C₂-C₈-Alkoholen
   bis zu 35 Gew.-% olefinisch ungesättigter Monomere ausgewählt aus
   (Meth)acrylamiden, Acrylnitril, Methacrylnitril, Diacetonacrylamid, Hydroxalkyl(meth)acrylaten, 2-Ketobutyl(meth)acrylat, N-Vinylpyrrolidon, N-Vinylformamid, N-Vinylcaprolactam, Tetrahydrofurfuryl-2-acrylat, Tetrahydrofurfuryl-2-methacrylat oder Tetrahydrofurfuryl-2-(meth)acrylamid sowie Styrol, α-Methylstyrol, Ethylen, Propylen, Isobuten, Butadien oder Isopren,
   gegebenenfalls 0,01 bis 0,5 Gew.-% Vinyltriethoxysilan, γ-Methacryloxypropyltrimethoxysilan und Vinyltris-2-methoxysilan,
   bis zu 10 Gew.-% monoolefinisch ungesättigte Mono- und oder Dicarbonsäuren und/oder deren Anhydriden
   und gegebenenfalls monoolefinisch ungesättigten 4 bis 21 C-Atome enthaltenden Monocarbonsäureestern (mit Ausnahme der bereits oben genannten Ester der (Meth)acryl-säure von C₂-C₈-Alkoholen), Vinylestern, Acrolein, Methacrolein, Acetoacetoxyethylacrylat, Vinylmethylether, Vinylisobutylether, Vinylpyridin, β-Aminoethylvinylether, Aminopentylvinylether oder tert.-Butylaminoethylmethacrylat, sowie Ureido-Monomeren und N-(Meth)acryloylprolin oder N-Acryloyl- oder N-Methacryloylderivaten von Aminosäuren oder N-Acryloyl- und N-Methacryloylderivaten von Aminosäureamiden
B) 0,5 bis 25 Gew.-% ungesättigten Verbindungen der Formel I 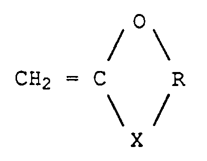 und
C) 0,01 bis 10 Gew.-% copolymerisierbaren olefinisch ungesättigten Acetophenon- und/oder Benzophenonderivaten, die keine Phenylgruppe mit einer freien Hydroxylgruppe in ortho-Position zur Carbonylgruppe aufweisen,
   wobei
   - X: O, S oder NR¹ und
   - R: gegebenenfalls substituiertes C₂- bis C₆-Alkylen sind und
   - R¹: C₁- bis C₈-Alkyl oder Phenyl bedeutet.
   Bevorzugte Ausführungsformen finden sich in den Ansprüchen 2 bis 7.

Als Substituenten für die Alkylenreste R sind beispielsweise C₁- bis C₄-Alkyl oder C₁- bis C₄-Alkoxy, wie Methyl, Ethyl, Butyl, Methoxy oder Ethoxy zu nennen.

Verbindungen der Formel I, die radikalisch unter Ringöffnung polymerisieren, sind aus den Arbeiten von W.J. Bailey et al¹⁻³⁾ sowie aus der japanischen Patentanmeldung J6 0224-687-A bekannt.
1) J. Makromol. Sci.-Chem. A2 (8&9), pp. 979-995 (1984)
2) J. Makromol. Sci.-Chem. A25 (1), pp. 27-40 (1987)
3) Acta Polymerica 39 (1988), Nr. 7, S. 335-341

So sind u.a. Copolymerisate cyclischer Ketenacetale zur Herstellung von mit funktionellen Gruppen terminierten Oligomeren in der Literatur beschrieben, gleichfalls sind Copolymerisate von olefinisch ungesättigten Ketenaminoacetalen (Halbaminalen) bekannt: s. J. Makromol. Sci.-Chem., A21(8&9), pp. 979-995 (1984).

Des weiteren ist die photochemisch initiierte ringöffnende Polymerisation von 2-Methyl-1,3-dioxepan beschrieben: s. J. Polym. Sci., Polym. Lett. Ed., 21(5), 373-380.

Von den bekannten Polymeren unterscheiden sich die erfindungsgemäßen Copolymerisate insbesondere in ihrer Zusammensetzung und damit verknüpft den unerwarteten Eigenschaften.

Für die Herstellung der erfindungsgemäßen Copolymerisate werden insbesondere bis zu 20 Gew.-% und bevorzugt 1 bis 15 Gew.-%, bezogen auf das Gesamtgewicht der eingesetzten Monomeren, der olefinisch ungesättigten cyclischen ringöffnend polymerisierenden Monomeren der Formel I verwendet.

Insbesondere sind 2-Methylendioxepan-1,3, 2-Methylendioxolan-1,3, N-Methyl-2-methylenoxazolidin oder 2-Methylenthiolan-1,3 und vorzugsweise 2-Methylendioxepan-1,3 und N-Methyl-2-methylenoxaolidin zu nennen.

Diese Monomeren können für sich allein oder auch im Gemisch eingesetzt werden. Besonders bevorzugt sind Mischungen aus 2-Methylen-1,3-dioxepan und N-Methyl-2-methylenoxazolidin.

Als Monomere A) sind z.B. monoolefinisch ungesättigte 4 bis 21 C-Atome enthaltende Monocarbonsäureester, insbesondere Ester der Acryl- und Methacrylsäure sowie Vinylester geeignet.

Acryl- und Methacrylsäureester von 1 bis 18 C-Atome enthaltenden Alkanolen sind z.B. Methylacrylat, Ethylacrylat, n-Butylacrylat und -methacrylat, Isobutylacrylat und -methacrylat, Isoamylacrylat und -methacrylat, 2-Ethylhexylacrylat und -methacrylat, Isooctylacrylat und -methacrylat, Propylacrylat und Isopropylacrylat, Methylmethacrylat, Decylacrylat und -methacrylat oder Dodecylacrylat und -methacrylat.

Als Vinylester kommt besonders Vinylpropionat in Betracht, geeignet sind ferner Vinylacetat, Vinylformiat und Vinylbutyrat.

(Meth)acrylester, die sich von Alkanolen mit 1 bis 3 Kohlenstoffatomen sowie tert.-Butylalkohol ableiten, sind in den Copolymerisaten für Haftkleber in der Regel zu nicht mehr als 25 Gew.-% enthalten, bezogen auf die Menge aus A), B) und C).

Die erfindungsgemäßen Copolymerisate können auch weitere olefinisch ungesättigte Monomere in Mengen bis zu 35 Gew.-% einpolymerisiert enthalten. In Betracht kommen (Meth)acrylamide wie Acrylamid und Methacrylamid. Acrylnitril, Methacrylnitril, Diacetonacrylamid, Hydroxalkyl(meth)acrylate wie 2-Hydroxyethyl(meth)acrylat und 4-Hydroxybutyl(meth)acrylat, des weiteren Monomere wie 2-Ketobutyl(meth)acrylat, N-Vinylpyrrolidon, N-Vinylformamid, N-Vinylcaprolactam, Tetrahydrofurfuryl-2-acrylat, Tetrahydrofurfuryl-2-methacrylat oder Tetrahydrofurfuryl-2-(meth)acrylamid sowie Styrol, α-Methylstyrol, Ethylen, Propylen, Isobuten, Butadien oder Isopren.

Für spezielle Verwendungszwecke können auch geringe Mengen der folgenden Monomeren, z.B. in Mengen von 0,01 bis 0,5 Gew.-%, bezogen auf die Summe der Gewichte der Monomeren, enthalten sein: Vinyltriethoxysilan, γ-Methacryloxypropyltrimethoxisilan und Vinyltris-2-methoxysilan.

Weitere Monomere, die für die Herstellung der erfindungsgemäßen Copolymerisate mitverwendet werden können sind:
Acrolein, Methacrolein, Acetoacetoxyethylacrylat, Vinylmethylether, Vinylisobutylether, Vinylpyridin, β-Aminoethylvinylether, Aminopentylvinylether oder tert.-Butylaminoethylmethacrlyat, sowie Ureido-Monomere, wie sie z.B. aus den US-PS'en 2 881 155, 3 300 429 und 3 356 627 bekannt sind; z.B. β-Ureidoethylacrylat, β-Ureidoethylvinylether, N-Dimethylaminoethyl-N'-vinyl-N,N'-ethylenharnstoff und N-Methacrylamidomethyl-N,N' -ethylenharnstoff.

In Mengen bis zu 10, insbesondere bis zu 6 Gew.-% können auch monoolefinisch ungesättigte Mono- und/oder Dicarbonsäuren und/oder deren Anhydride verwendet werden, z.B. (Meth)acrylsäure, Maleinsäure, Fumarsäure, Maleinsäureanhydrid, Itaconsäureanhydrid oder Citraconsäureanhydrid. Bevorzugt sind Acrylsäure und Methacrylsäure.

Weitere geeignete carboxylgruppentragende Monomere sind die Maleinsäure-, Fumarsäure- und Itaconsäuremonoester von Alkanolen, die 1 bis 24 C-Atome enthalten, wobei die Einführung der Estergruppe in die Copolymerisate auch durch Umsetzung copolymerisierten Maleinsäureanhydrids mit den entsprechenden Alkanolen erreicht werden kann.

Saure Monomere sind auch die Halbamide von 1 bis 12 C-Atome enthaltenden aliphatischen, cycloaliphatischen und/oder aromatischen Aminen der genannten Dicarbonsäuren.

Ferner sind noch Monomere wie N-(Meth)acryloylprolin oder N-Acryloyl- oder N-Methacryloylderivate von Aminosäuren wie Glycin, Alanin, 6-Aminohexansäure oder N-Acryloyl- und N-Methacryloylderivate von Aminosäureamiden wie Glycinamid, Alaninamid, z.B. N-Acryloylalanin zu nennen. Derartige Monomere sind z.B. aus der US-PS 29 05 049 bekannt.

Als Monomere C) kommen beispielsweise Verbindungen der allgemeinen Formel Ia 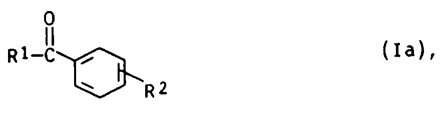
in der die Variablen folgende Bedeutung haben:
R¹ -CH₃ oder -C₆H₅,
R² 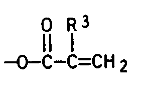 und
R³ -H oder -CH₃, in Betracht. Bevorzugt sind Verbindungen Ia in denen R¹ die Phenylgruppe ist und R² sich in para-Position zur Carbonylgruppe des Phenongrundkörpers befindet.

Außerdem kommen als Monomere C) Verbindungen der allgemeinen Formel II 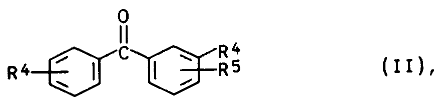
in der die Variablen folgende Bedeutung haben:
- R⁴: -H oder CₙH₂ₙ₊₁ mit n = 1 bis 4,
- R⁵: -O-R⁶ oder 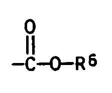 und
- R⁶: 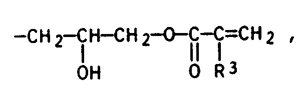
in Betracht. Vorzugsweise werden die Verbindungen II eingesetzt, in denen R⁵ die Estergruppierung ist und sich in para-Position zur Carbonylgruppe des Phenongrundkörpers befindet. Weiterhin eignen sich als Monomere C) Verbindungen der allgemeinen Formel III 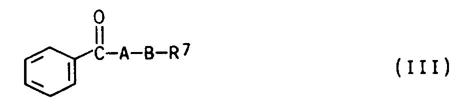
sowie Verbindungen der allgemeinen Formel IV 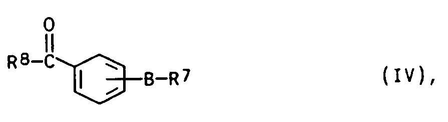
in denen die Variablen folgende Bedeutung haben:
- R⁷: 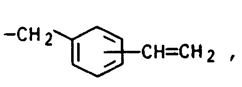
- R⁸: -CₙH₂ₙ₊₁ mit n = 1 bis 3 oder -C₆H₅,
- A: gesättigte oder ungesättigte Kohlenwasserstoffkette, die verzweigt sein kann, mit 1 bis 3 C-Atomen oder ein Kohlenwasserstoffring mit 3 bis 6 C-Atomen,
- B: -O-, 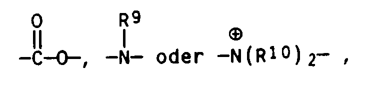
- R⁹: -H oder -CₙH₂ₙ₊₁ mit n = 1 bis 8 und
- R¹⁰: -CₙH₂ₙ₊₁ mit n = 1 bis 4.

Ferner eignen sich als Monomere C) Verbindungen der allgemeinen Formel V 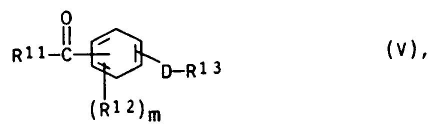
in der die Variablen folgende Bedeutung haben:
- R¹¹: eine niedere Alkyl- oder die Phenylgruppe, wobei die Wasserstoffatome der Phenylgruppe ein- oder mehrfach durch Halogenatome, niedere Alkoxy- oder durch die Hydroxylgruppe mit der Maßgabe substituiert sein können, daß kein in ortho-Position zur Carbonylgruppe des Phenongrundkörpers befindliches Wasserstoffatom der Phenylgruppe durch eine Hydroxylgruppe ersetzt wird,
- R¹²: Halogenatome, niedere Alkoxygruppen und/oder die Hydroxylgruppe, mit der Maßgabe, daß sich im Fall der Hydroxylgruppe R¹² nicht in ortho-Position zur Carbonylgruppe des Phenongrundkörpers befindet,
- m: 0 bis 4,
- D: -O-, 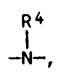 eine Oxyalkylenoxy-Kette, eine Carbamoylalkylenoxy-Kette oder eine Alkylenoxy-Kette und
- R¹³: eine Alkenyl- oder eine ω-Carboxylalkenylgruppe.

Mit Vorteil werden als Monomere C) auch Verbindungen der allgemeinen Formel VI 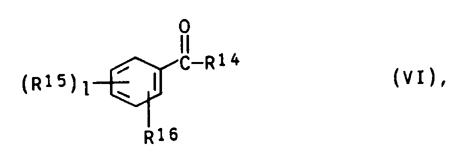
in der die Variablen folgende Bedeutung haben:
- R¹⁴: R⁸, oder eine Phenylgruppe, innerhalb der bis zu 1-Wasserstoffatome durch R¹⁵ ersetzt sein können,
- 1: 0 bis 4,
- R¹⁵: -H, -CF₃, -O-Alkyl und/oder Alkyl-COO- mit jeweils 1 bis 4 C-Atomen in der Alkylgruppe, Halogen, -CN, -COOH oder eine zur Carbonylgruppe des Phenongrundkörpers nicht ortho-ständige -OH-Gruppe,
- R¹⁶: eine Gruppe der allgemeinen Formel VII 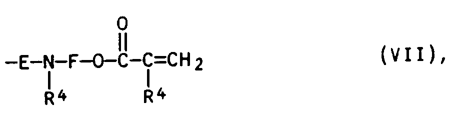 in der die Variablen folgende Bedeutung haben:
- E: 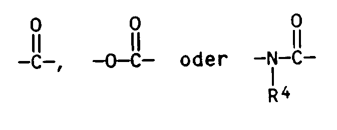 und
- F: eine 2 bis 12 C-Atome aufweisende Kohlenwasserstoffkette, die ein- oder mehrfach durch Sauerstoffatome unterbrochen sein kann,
eingebaut. Bevorzugte Verbindungen VI sind der Acryl- und Methacrylsäureester des Alkohols folgender Struktur

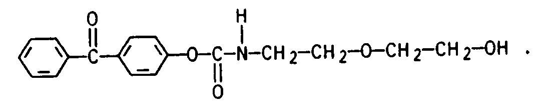

Besonders bevorzugte Monomere C) sind jedoch Verbindungen der allgemeinen Formel VIII 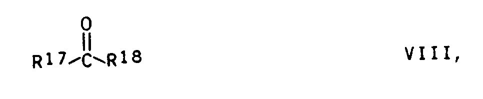
in der die Variablen folgende Bedeutung haben:
- R¹⁷: eine 1 bis 3 C-Atome enthaltende lineare Alkylgruppe, eine 3 oder 4 C-Atome enthaltende Alkylgruppe deren Wasserstoffatome ein- oder mehrfach durch Halogenatome ersetzt sein können, eine Arylgruppe oder R¹⁸,
- R¹⁸: ein Rest der Formel 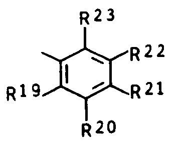 ist,
- R¹⁹ bis R²³: unabhängig voneinander R⁴, -OH (das zur Carbonylgruppe des Phenongrundkörpers nicht ortho-ständig sein darf), -OCH₃, -OC₂H₅, -SH, -SCH₃, -Cl, -F, -CN, -COOH, -COO-Alkyl mit 1 bis 3 C-Atomen in der Alkylgruppe, -CF₃, -N(CH₃)₂, -N(C₂H₅)₂, -N(CH₃)C₆H₅, -N^{⊕}(CH₃)₃X⁻ oder -N^{⊕}(CH₃)₂X⁻ sind, wobei X⁻ ein Säureanion wie Cl^{⊖}, Br^{⊖}, CH₃COO^{⊖}, HSO₄^{⊖}, H₂PO₄^{⊖} oder NO₃^{⊖} sein kann, mit der Maßgabe, daß wenigstens einer der Reste R¹⁹ bis R²³ für einen Rest der allgemeinen Formel IX 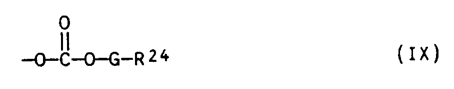 steht, in der die Variablen folgende Bedeutung haben:
- R²⁴: 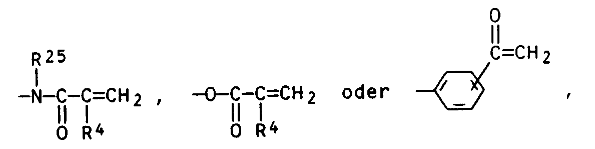
- R²⁵: R¹ oder R⁴,
- G: ⁅{-(K)ᵢ-J-}ⱼ-(K)ₖ⁆ und/oder ⁅{-(K)ᵢ-J-}ⱼ-(K)ₖ-J-}ₕ⁆,
- K: eine Alkylengruppe deren Wasserstoffatome ein- oder mehrfach durch Halogenatome substituiert sein können, eine 5 bis 10 C-Atome enthaltende Cycloalkylengruppe oder eine Phenylengruppe,
- J: -O-, -S-, 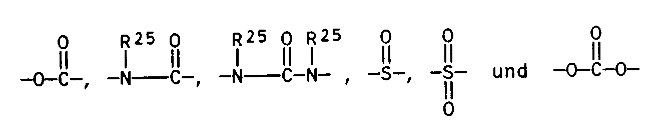
- i,k: 1 bis 10 und
- j,h: 0 bis 25,
wobei innerhalb der Verbindungen VIII die Monomeren 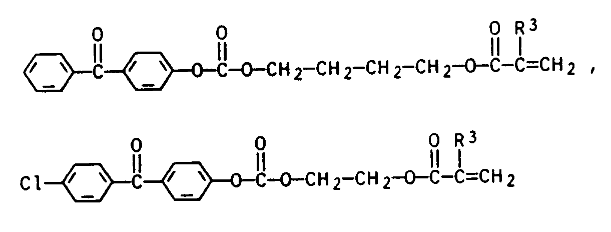
sowie 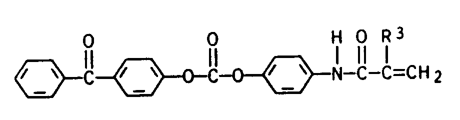
bevorzugt werden. Die Verbindungen der allgemeinen Formeln I bis VI sowie der allgemeinen Formel VIII sind bekannt und z.B. in den Schriften US 3 214 492 (Verbindungen I), US 3 429 852 (Verbindungen II), DE-A 28 18 763 (Verbindungen III und IV), EP-A 246 848 (Verbindungen V), in der DE-A 38 20 463 (Verbindungen VI) und in der DE-A 38 44 444 (Verbindungen VIII) beschrieben. Vorzugsweise enthalten die erfindungsgemäßen Copolymerisate 0,1 bis 5 Gew.% der Monomeren C) eingebaut.

Die erfindungsgemäßen Copolymerisate für Haftkleber haben im allgemeinen eine Glasübergangstemperatur, gemessen mittels Differentialthermoanalyse, von unter 0°C, bevorzugt von unter -20°C, besonders bevorzugt von unter -30°C und einen K-Wert von 15 bis 120, bevorzugt von 30 bis 80, ganz besonders bevorzugt von 35 bis 65. Als Schmelzhaftkleber können erfindungsgemäße UV-vernetzbare Copolymerisate verwendet werden, die einen K-Wert von 25 bis 65 aufweisen.

Die Copolymerisate können nach bekannten Verfahren der Lösungs-, Emulsions- und Suspensionspolymerisation und nach Verfahren zur Herstellung von Sekundärdispersionen hergestellt sein; derartige Verfahren sind z.B. aus den DE-OS'en 35 43 361 und 37 20 850 bekannt.

übliche Verfahren für die Emulsionscopolymerisation sind z.B. in den US-PS'en 2 754 280 und 2 795 564 sowie in der EP-PS 00 37 923 beschrieben. So können die Monomeren z.B. mit einem anionischen, einem kationischen oder einem nicht-ionischen Dispergiermittel emulgiert werden, wobei in der Regel etwa 0,05 bis 10 Gew.-%, bezogen auf das Gesamtgewicht der Monomeren, dieser Dispergiermittel verwendet werden.

Die Emulsionscopolymerisate können durch Stufen-, Gradienten-, Batch- und übliche Zulaufverfahren sowie durch kontinuierliche Reaktionsführung und Verfahren zur Herstellung von Sekundärdispersionen wie sie z.B. aus den DE-OS'en 35 43 361 oder 37 12 860 bekannt sind, hergestellt werden.

Diese Verfahren schließen die Stufen-, Gradienten- und üblichen Zulaufverfahren von Monomeren- und/oder Initiator(systemen) ein; Emulsionspolymerisationsverfahren sind z.B. bei H. Bartl und J. Falbe, "Houben-Weyl, Methoden der organischen Chemie, Makromolekulare Stoffe", Bd. E20, Teil 1 und 2, Georg-Thieme-Verlag, Stuttgart, Hew York, 1987, sowie in der im Teilband 3 angegebenen Literatur beschrieben. Geeignete Dispergiermittel sind z.B. im Houben-Weyl, Bd. E20, Teil 1 und 2, Thieme, Stuttgart (1987) und in dem Buch von Stache, "Tensidtaschenbuch", 2. Ausgabe, Carl-Hanser-Verlag, München, Wien, 1981 aufgeführt.

Bevorzugt als Polymerisationsverfahren ist die Polymerisation in organischen Lösungsmitteln, vorzugsweise arbeitet man in Abwesenheit von Wasser oder in Gegenwart wasserbindender Mittel.

Die Copolymerisate werden bei Temperaturen von 20 bis 150°C, vorzugsweise von 80 bis 120°C, in Gegenwart von 0,25 bis 10 Gew.-% , bezogen auf die Monomeren, an Peroxiden oder Azostartern als Polymerisationsinitiatoren und in Gegenwart von 0 bis 200 Gew.-%, bevorzugt 5 bis 100 Gew.-%, bezogen auf die Monomeren, an indifferenten Lösungsmitteln, durch Substanz- oder aber bevorzugt durch Lösungspolymerisation hergestellt.

Als Lösungsmittel werden vorzugsweise solche vom Siedebereich 50 bis 150°C verwendet, die daneben noch kleine Anteile höher- oder niedrigsiedender Komponenten enthalten können. Geeignet sind z.B. Kohlenwasserstoffe wie Benzol, Toluol, o-, m- und p-Xylol und Benzine, die vorzugsweise einen Siedebereich von 60 bis 120°C haben.

Bevorzugt sind Toluol und Essigsäureethyl- oder -butylester und ferner Ketone wie Aceton oder Methylethylketon sowie Gemische aus diesen.

Für die Durchführung der Polymerisation können dem Reaktionsgemisch auch den Polymerisationsgrad senkende Verbindungen, sogenannte Polymerisationsregler zugesetzt werden.

Die Polymerisationsverfahren sind in der Literatur vielfach beschrieben und bieten demgegenüber keine Besonderheiten.

Sofern man jedoch zur Herstellung der erfindungsgemäßen Copolymerisate bei der Lösungspolymerisation Säuren wie Acrylsäure, Methacrylsäure, Vinylsulfonsäure oder andere mitverwendet, werden die cyclischen Monomeren der Formel I als separater Zulauf, ggf. gelöst in den Comonomeren wie iso-Amylacrylat oder 2-Ethylhexylacrylat der Reaktionsmischung zugeführt. Es ist oftmals auch von Vorteil, den Monomeren vor der Zugabe der Monomeren der Formel I geringe Mengen eines Orthoesters, z.B. Orthoameisensäureethylester, in Mengen bis zu 2 Gew.-%, bezogen auf die Monomeren, zuzusetzen. Insbesondere ist es wichtig auf Wasserfreiheit zu achten und gegebenenfalls die Einsatzstoffe vorher zu trocknen.

Die erfindungsgemäßen Copolymerisate eignen sich nach der Vernetzung als überzugs-, Imprägnier- oder Klebemittel und insbesondere als Haftklebemittel, die vorzugsweise in lösemittelfreier Form, z.B. als Schmelzen, aber auch in gelöster Form, z.B. als organische Lösemittel enthaltende Polymerlösungen, zum Beschichten von flächigen Substraten oder Formkörpern aus Metall, Kunststoff, Papier, Pappe, Leder oder anorganischen Materialien verwendet werden können. Sie haben hervorragendes Auffließ- und Benetzungsverhalten auf den unterschiedlichsten Substraten.

Die erfindungsgemäßen Copolymerisate haben eine hohe Reaktivität gegenüber UV-Strahlen lassen sich aber thermisch außerordentlich schlecht vernetzen: daher ist ein Zusatz von Polymerisationsinhibitoren nicht erforderlich. Die thermische Stabilität ermöglicht die Einstellung optimalen Fließverhaltens, z.B. durch Wahl der Applikationstemperatur, womit ein Auftrag mit den verschiedensten Schmelzauftragsgeräten wie Walzen, Rakeln, Düsen usw., in denen die Schmelzen unterschiedlichen Scherbeanspruchungen ausgesetzt sind, möglich wird. Auch in Form von Pulvern aufgetragene UV-vernetzbare Massen benetzen bei höheren Temperaturen otpimal.

Die UV-Reaktivität der Copolymerisate kann so gewählt werden, daß sie auch offen bei künstlichem Licht gehandhabt werden können, ohne zu vernetzen. Erst bei Bestrahlung mit UV-Licht oder bei direkter Einwirkung von Sonnenlicht vernetzen die Massen rasch. Vernetzende Wellenlängen liegen vorzugsweise im Bereich von 200 bis 400 nm.

Die erfindungsgemäßen Massen können weiterhin unter Luftsauerstoff vernetzt werden; der kostenintensive Einsatz von Inertgas wie Edelgasen, Stickstoff oder Kohlendioxid ist nicht erforderlich.

Die Bestrahlung der Beschichtung kann mit handelsüblichen UV-Strahlern, z.B. Quecksilberhochdruck- und Quecksilbermitteldruckstrahlern mit einer Strahlungsleistung von z.B. 80 Watt/cm und höher erfolgen. Ebenso können auch elektrodenlose UV-Strahler, mit einer Strahlungsleistung von z.B. 80 Watt/cm oder 120 Watt/cm, eingesetzt werden (Fusion-System). Punktförmig aufgetragene Schmelzhaftkleber können durch Bestrahlen mit dem UV-Licht von UV-Punktstrahlern oder UV-Kleinflächenstrahlern vernetzt werden.

Die UV-Technologie wird z.B. in dem Buch von Roger Philips, "Sources and Applications of Ultraviolet Radiation", Academic Press, London, New York, 1983, beschrieben.

Die Geschwindigkeit, mit der die beschichteten Trägermaterialien die UV-Bestrahlungsstrecke durchlaufen können, um eine für den jeweiligen Anwendungsfall ausreichende Vernetzung zu erzielen, hängt u.a. von der Dicke der Beschichtung, von der Strahlungsleistung und der Anzahl der UV-Strahler und deren Abstand von der Beschichtungsoberfläche (Fokussierung) ab.

Eine größere Anzahl Strahler und eine höhere Strahlungsleistung ermöglicht i.a. eine höhere Fertigungsgeschwindigkeit. In manchen Anwendungsfällen kann es auch von Vorteil sein, anstelle weniger Strahler hoher Strahlungsleistung, mehrere Strahler geringerer Strahlungsleistung einzusetzen.

Insbesondere kann die Bestrahlung auch gleichzeitig sowohl von der Beschichtungsseite als auch von der Substratseite her erfolgen, wenn Substrate (z.B. Folien) verwendet werden, die genügend UV-durchlässig sind.

Schmelzhaftkleber sollten bei möglichst niedriger Temperatur verarbeitet werden können. Die erfindungsgemäßen Schmelzhaftkleber lassen sich z.T. bei Temperaturen von unter 95°C verarbeiten, so daß auch weichgemachte PVC-Folien oder Polypropylenfolien beschichtbar sind.

Überraschenderweise können die erfindungsgemäßen Schmelzhaftkleber auch direkt auf Papier oder Vliesstoffe aufgebracht werden.

Auch erlauben die erfindungsgemäßen Schmelzhaftkleber die Vernetzung dickerer Schichten, z.B. solcher über 1 mm, so daß die erfindungsgemäßen UV-vernetzbaren Massen auch als Dichtungsmassen und/oder Klebdichtmassen eingesetzt werden können.

Die neuen Schmelzhaftkleber können leicht mit den üblichen Schmelzkleberauftragsvorrichtungen, z.B. Breitschlitzdüsen, Rakeln und im Siebdruckverfahren, ggf. auch durch Transferauftrag, auf flächige Gebilde, wie Folien, Papier, Pappe, Stoff, Leder, sowie Holz, Metalle, Gummi und Glas aufgebracht werden. Als Substrate geeignete Folien können z.B. aus Polyethylen, Polyamiden, Polyethylenglykolterephthalat, Polypropylen, Polyvinylchlorid, Celluloseacetat, Polysiloxan oder Aluminium bestehen. Ebenso können auch aus Kunststoffen geschäumte Substrate, Vliesstoffe, textile Gewebe und Garne beschichtet oder ggf. getränkt werden.

Die erfindungsgemäßen Copolymerisate dienen insbesondere zur Herstellung haftklebrig ausgerüsteter Artikel, wie Haftklebeetiketten, Haftklebebändern oder medizinischen Klebebändern oder zur Herstellung haftklebrig ausgerüsteter Zwischenprodukte wie haftklebrigen Schichten für die Beflockung.

Sie zeichen sich - besonders auch in der Wärme - durch hohen Rolling ball Tack und hohe Scherstandfestigkeit aus, wodurch eine der Hauptanforderungen an Klebstoffe gelöst wird.

Eine wichtige Eigenschaft der erfindungsgemäßen Copolymerisate ist in diesem Zusammenhang ihre Glasübergangstemperatur "Tg", so daß infolgedessen die Auswahl der Monomeren und deren Mengenanteile von Einfluß auf die Tg sind. Die Tg der Polymeren für Haftkleber sollten unter 0°C liegen (d.h., das Polymere muß einen weichen überzug geben), vorzugsweise soll die Tg unter -10°C liegen.

Die Tg ist ein übliches Maß für die Charakterisierung der Härte eines Polymeren und Angaben darüber befinden sich in dem Buch von Flory, "Principles of Polymer Chemistry", Seiten 56 und 57 (1953) Cornell University Press. Glastemperaturen sind auch in dem Nachschlagwerk von Brandrup und Immergut, "Polymer Handbook", Sec. III, Seiten 61-63, Interscience 1966 angegeben.

Es ist zwar vorzuziehen, die Tg eines Polymeren zu bestimmen, jedoch kann diese auch nach der Veröffentlichung von Fox, Bull. Am. Physics, Soc. 1, 3, Seite 123 (1956) berechnet werden.

Zweckmäßigerweise liegt die Tg der erfindungsgemäßen Copolymerisate zwischen 0 bis -40°C, vorzugsweise zwischen -10 bis -30°C. Sie kann durch die Wahl der Monomeren weitgehend beliebig eingestellt werden, die Kriterien dafür sind im Prinzip bekannt.

Die erfindungsgemäßen vernetzten Copolymerisate zeichnen sich durch hohe Scherstandfestigkeit ihrer Verklebungen bei gleichzeitig hohem rolling ball tack aus.

Die neuen Haftklebemittel lassen sich zudem leicht durch die Wahl der Monomerzusammensetzung in ihren Eigenschaften den geforderten Anwendungsfällen anpassen. So können leicht Etiketten mit einer Haftkleberschicht hergestellt werden, die sich rückstandsfrei von verschiedenen Substraten abziehen lassen (wiederabziehbare Etiketten, wiederabziehbare Klebebänder), ferner kann man auch doppelseitige Klebebänder, Elektroisolierbänder und selbstklebende Dekorfolien herstellen.

Die neuen Haftklebemittel können in an sich üblicher Weise modifiziert und/oder konfektioniert werden. Dafür können die üblichen klebrigmachenden Harze (Tackifier), z.B. Kohlenwasserstoffharze, gegebenenfalls modifizierte Kolophoniumharze, β-Pinen-Harze, Polyterpen-Harze, metallionenenthaltende (modifizierte) Kolophoniumharze wie Zink-Resinate, Terpenphenolharze, Ketonharze, Aldehydharze, Cumaron-Indenharze, (Di)cyclopentadienharze, die den Copolymerisaten in Mengen von bis zu 50 Gew.-% zugesetzt werden können verwendet werden. Ferner kommen Homopolymerisate wie Poly(2-ethylhexylacrylat) oder Poly(n-butylacrylat), Weichmacher, z.B. auf Basis von Mono-, Di- oder Polyesterverbindungen, polychlorierten Kohlen-wasserstoffen oder Paraffinölen, Farbstoffe, Pigmente, Stabilisatoren, kautschukelastische Stoffe, wie Natur- oder Synthesekautschuke oder Styrol-Butadien-Co-Polymere, Polyvinylether oder Polybutadienöle, die in geringen Mengen zugesetzt werden können als Zusätze in Betracht. Zur Modifizierung sind ferner Polyamide und Polyester geeignet.

### Anwendungstechnische Prüfung als Haftkleber

### Klebeprüfungen

Für die Durchführung der Klebeprüfungen werden auf einem beheizbaren Streichtisch Polyethylenglykolterephthalatfolien (Hostaphan RN 36, Fa. Hoechst AG) bei 95°C mit den Schmelzhaftklebern derart beschichtet, daß sich ein Auftragsgewicht von 25 g/m² ergibt.

Die beschichteten Folien werden auf das Endlosband einer UV-Bestrahlungsanlage gelegt und mit einer Geschwindigkeit von 20 m/min unter zwei Quecksilbermitteldruckstrahlern mit einer Strahlungsleistung von jeweils 80 Watt/cm hindurchgefahren. Die Bestrahlung erfolgt in Luftsauerstoffatmosphäre.

Die bestrahlten Folien werden anschließend mit adhäsiv beschichtetem Papier (Siliconpapier) abgedeckt und die Klebeprüfungen durchgeführt.

Die so hergestellten Folien werden in 2 cm breite Streifen geschnitten und diese Streifen mit der Haftklebeschicht auf eine verchromte Messingplatte aufgebracht. Die Platte wird dann mit den Streifen 24 h bei 23°C und 65 % rel. Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Flächen von 20 x 25 mm zugrundegelegt, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23°C und 50°C durchgeführt. Alle Messungen werden 5fach gemacht.

Zur Messung des Schlingenwertes wird ein 2 cm breiter Klebestreifen von 150 mm Länge zu einer Schlinge geformt und die beiden Enden des Klebestreifens in die Klemmbacken einer Zugprüfmaschine gespannt. Die Klebestreifenschlinge wird mit der Klebstoffseite in Kontakt mit einer Normplatte aus nichtrostendem Stahl gebracht. Die für das Abziehen des Streifens von der Stahlplatte erforderliche Kraft wird gemessen. Aus sechs Messungen wird der Mittelwert gebildet.

Der Kugelroll-Tack (rolling ball tack) wird nach PSTC-6 (Pressure-Sensitive Council's Test Method No. 6) durchgeführt: Eine Stahlkugel von 1,1 cm Durchmesser rollt von einer schiefen Ebene mit halbkreisförmiger Innenfläche und einem Neigungswinkel von 21°30' auf die Klebstoffschicht des Prüfstreifens. Die zurückgelegte Strecke bis zum Stillstand der Kugel gilt als Maß für den Tack. Je größer die Distanz ist, die die Kugel zurücklegt, desto geringer ist der Kugelroll-Tack. Für die Prüfung werden Klebestreifen mit einem gleichmäßigen Klebstoffauftrag von 25 g/m² verwendet. Es werden jeweils sieben Messungen durchgeführt, wobei der kleinste und größte Wert verworfen und der Mittelwert aus den verbleibenden fünf Werten gebildet wird.

Die in den folgenden Beispielen angegebenen Teile und Prozente beziehen sich auf das Gewicht. Die Bestimmung der K-Werte erfolgte nach DIN 53 726 in 1 %iger Lösung in Tetrahydrofuran bei 25°C.

Die Fließkurven werden mit einem Rheomaten (Kegel-Platte-System) der Fa. Haake, Karlsruhe, mit rechnerunterstützter Auswertung in einem Schergeschwindigkeitsbereich von 100 1/s bis 500 1/s bei verschiedenen Temperaturen aufgenommen.

Die folgenden Beispiele dienen der näheren Erläuterung der Erfindung.

### Beispiel 1 (K1)

Eine Mischung aus 200 g Toluol, 100 g einer Monomermischung aus 850 g i-Amylacrylat, 91 g 1-Methylen-1,3-dipoxepan, 59 g Methylacrylat und 6,5 g des Benzophenonderivates der Formel 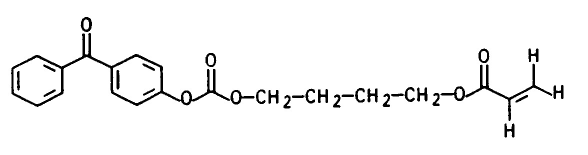
und 3 g tert.-Butylper-2-ethylhexanoat (tert.-Butylperoctoat) wird bei 85 bis 95°C 15 Minuten anpolymerisiert. Im Verlauf von 4 Stunden wird der Rest der Monomermischung und eine Lösung von 23 g tert.-Butylperoctoat in 50 g Toluol zugegeben. Nach beendeter Zugabe rührt man noch 4 Stunden bei einer Innentemperatur von 80 bis 90°C nach.

Anschließend werden das Lösemittel und flüchtige Anteile abdestilliert.

Man erhält ein bei Raumtemperatur fließendes Copolymerisat mit einem K-Wert von 45,6.

Die Schmelzviskosität bei 121°C beträgt 8300 mPa·s (D = 310 1/s).

### Vergleichsbeispiel (K2)

Eine Monomermischung aus 500 g 2-Ethylhexylacrylat, 350 g n-Butylacrylat und 150 g Methylacrylat und 6,5 g des Benzophenonderivates (IV) wird in der oben angegebenen Weise polymerisiert. Man erhält ein Copolymerisat vom K-Wert 44.

### Prüfung auf thermische Stabilität

Zur Prüfung der thermischen Stabilität wird eine Probe von ca. 10 g auf einen Aluminiumblechdeckel verteilt und zwei Stunden einer Temperatur von 150°C ausgesetzt. Anschließend läßt man abkühlen und überschichtet in einer Petrischale den Polymerfilm mit einem Lösemittel, in der Regel Essigsäureethylester. Nach einer Wartezeit von 24 Stunden untersucht man auf ungelöste Anteile bzw. Gelkörper.

Zur Prüfung der vorhandenen UV-Reaktivität nach Temperung wird eine Probe zunächst für 2 Stunden in der o.g. Weise zunächst einer Temperatur von 150°C ausgesetzt.

Anschließend wird der Deckel mit der darauf verteilten Probe geteilt und die eine Hälfte 15 Sekunden mit dem Licht einer Quecksilberlampe aus 10 cm Abstand bestrahlt (Uvaspot 400 K, Fa. Dr. Hönle).

Da die Vernetzung der Copolymerisate auch von den verwendeten Strahlern und deren Betriebsstundenzahl abhängt, ist in der folgenden Tabelle die Strahlungsenergie der Strahler in Abhängigkeit von der Bandgeschwindigkeit angegeben.

**Tabelle 1**

| Strahlungsenergie in Abhängigkeit von der Bandgeschwindigkeit und der Anzahl der betriebenen Strahler | | |
|---|---|---|
| Bandgeschwindigkeit [m/min] | Strahlungsenergie^{*)} [J/cm²] | |
| | 1 Strahler | 2 Strahler |
| 10 | 0,170 (A) | 0,347 (AA)^{**)} |
| 15 | 0,124 (B) | 0,258 (BB) |
| 20 | 0,093 (c) | 0,194 (CC) |

| | | |
|---|---|---|
| ^{*)} Gemessen mit UVICURE UV CURING RADIOMETER S/H 0588047 der Fa. EIT-Electronic Instrumentation and Technologie, Inc. | | |
| ^{**)} Die Buchstabenkombinationen kodieren die Bestrahlungsbedingungen. | | |

### Beispiele: UV-reaktive Haftkleber + Tackifier

Für die Modifizierung des UV-reaktiven Schmelzhaftklebers nach Beispiel 1 (K1) wurden jeweils 150 g des Copolymerisats mit einem handelsüblichen Kolophoniumharz, Foral® 85 der Fa. Hercules Inc. gemischt.

| Mischung | K1 | Foral 85 |
|---|---|---|
| (K3) | 200 g | 20 g |
| (K4) | 200 g | 30 g |

**Tabelle 2**

| Ergebnisse der anwendungstechnischen Prüfung als Haftkleber | | | | | |
|---|---|---|---|---|---|
| Probe | Bestrahlungsbedingungen | Scherfestigkeit (Stunden) bei | | Schälfestigkeit [N/cm²] | |
| | | 23°C | 50°C | sofort | nach 24 Stunden |
| K 1 | (BB) | >24 | >24 | 3,8 | 10,7 |
| K 2 | (CC) | >24 | >24 | 8,3 | 11,2 |
| K 3 | (BB) | >24 | >10 | 5,6 | 12,2 |
| K 4 | (AA) | >24 | >10 | 6,0 | 12,8 |

| Probe | Bestrahlungsbedingung | Rolling Ball Tack [cm] | Schlingenwert [N/cm²] | Fingertack^{*)} Note |
|---|---|---|---|---|
| K 1 | (CC) | 5,5 | 6,9 | 4 (sehr gut) |
| K 2 | (CC) | >20 | 7,4 | 3 (gut) |
| K 3 | (B) | 5,0 | 7,5 | 4 (sehr gut) |
| K 4 | (CC) | 4,0 | 8,0 | 4 (sehr gut) |

| | | | | |
|---|---|---|---|---|
| ^{*)} Der Fingertack wurde durch eine Gruppe beurteilt. Für die Fingerklebrigkeit wurden Noten in einer von 4 (sehr gute Klebrigkeit) bis 1 (noch ausreichende Klebrigkeit) reichenden Notenskala vergeben. | | | | |

**Tabelle**

| Untersuchung der thermischen Stabilität und der UV-Reaktivität | | |
|---|---|---|
| Probenbez. | Thermische Stabilität | UV-Reaktivität |
| K1 | nicht vernetzt, keine Gelkörper | vernetzt, gequollenes Gel |

## Patentansprüche

1. UV-vernetzbare Copolymerisate, die aufgebaut sind aus
A) 50-95,5 Gew.-% Estern der (Meth)acrylsäure mit C₂-C₈-Alkoholen
bis zu 35 Gew.-% olefinisch ungesättigter Monomere ausgewählt aus
(Meth)acrylamiden, Acrylnitril, Methacrylnitril, Diaceton-acrylamid, Hydroxalkyl(meth)acrylaten, 2-Ketobu-tyl(meth)acrylat, N-Vinylpyrrolidon, N-Vinylformamid, N-Vinylcaprolactam, Tetrahydrofurfuryl-2-acrylat, Tetrahydrofurfuryl-2-methacrylat oder Tetrahydrofurfuryl-2-(meth)acrylamid sowie Styrol, α-Methylstyrol, Ethylen, Propylen, Isobuten, Butadien oder Isopren,
gegebenenfalls 0,01 bis 0,5 Gew.-% Vinyltriethoxysilan, γ-Methacryloxypropyltrimethoxysilan und Vinyltris-2-methoxysilan,
bis zu 10 Gew.-% monoolefinisch ungesättigte Mono- und oder Dicarbonsäuren und/oder deren Anhydriden
und gegebenenfalls monoolefinisch ungesättigten 4 bis 21 C-Atome enthaltenden Monocarbonsäureestern (mit Ausnahmne der bereits oben genannten Ester der (Meth)acrylsäure von C₂-C₈-Alkoholen), Vinylestern, Acrolein, Methacrolein, Acetoacetoxyethylacrylat, Vinylmethylether, Vinylisobutylether, Vinylpyridin, β-Aminoethylvinylether, Aminopentylvinylether oder tert.-Butylaminoethylmethacrylat, sowie Ureido-Monomeren und N-(Meth)acryloylprolin oder N-Acryloyl- oder N-Methacryloylderivaten von Aminosäuren oder N-Acryloyl- und N-Methacryloylderivaten von Aminosäureamiden
B) 0,5 bis 25 Gew.-% ungesättigten Verbindungen der Formel I 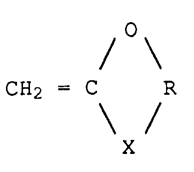 und
C) 0,01 bis 10 Gew.-% copolymerisierbaren olefinisch ungesättigten Acetophenon- und/oder Benzophenonderivaten, die keine Phenylgruppe mit einer freien Hydroxylgruppe in ortho-Position zur Carbonylgruppe aufweisen,
wobei
X O, S oder NR¹ und
R gegebenenfalls substituiertes C₂- bis C₆-Alkylen sind und
R¹ C₁- bis C₈-Alkyl oder Phenyl bedeutet.

2. Copolymerisate gemäß Anspruch 1, die als Komponenten A) neben Acryl- und/oder und/oder Methacrylsäureestern noch carboxylgruppenhaltige ungesättigte Verbindungen enthalten.

3. Copolymerisate gemäß Anspruch 2, die als carboxylgruppenhaltige Verbindungen Acrylsäure, Methacrylsäure, Maleinsäure, Fumarsäure oder Malein- oder Fumarsäuremonoester oder -amide enthalten.

4. Copolymerisate gemäß Anspruch 1, die als Komponenten A) neben Acryl- und/oder Methacrylsäureestern noch N-Vinylpyrrolidon, Styrol, Vinyltoluol, Ethen, Propen, Buten oder Butadien enthalten.

5. Copolymerisate gemäß Anspruch 1, die als Komponente B) 2-Methylendioxepan-1.3 oder N-Methyl-2-methylenoxazolidin enthalten.

6. Copolymerisate gemäß Anspruch 1, enthaltend als Monomere C) wenigstens eine der Verbindungen 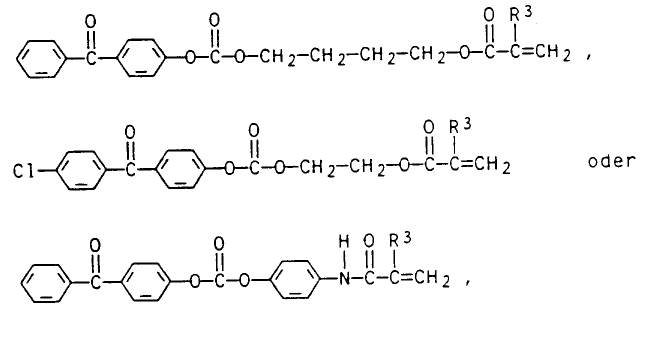 in denen die Variable R³ Wasserstoff oder die Methylgruppe bedeutet.

7. Copolymerisate gemäß Anspruch 1, die durch UV-Strahlen im Wellenlängenbereich von 200 bis 400 nm vernetzbar sind.

8. Verfahren zur Herstellung von Copolymerisaten gemäß Anspruch 1, dadurch gekennzeichnet, daß man die Komponenten in Lösung umsetzt.

9. Verfahren gemäß Anspruch 8, dadurch gekennzeichnet daß man in Abwesenheit von Wasser oder in Gegenwart wasserbindender Mittel arbeitet.

10. Verwendung der UV-vernetzbaren Copolymerisate gemaß Anspruch 1 mit einem K-Wert von 25 bis 65 als Schmelzhaftkleber.

## Claims

1. A UV-crosslinkable copolymer built up from
A) 50-95.5% by weight of esters of (meth)acrylic acid with C₂-C₈-alcohols
up to 35% weight of olefinic unsaturated monomers selected from
(meth)acrylamides, acrylonitrile, methacrylonitrile, diacetoneacrylamide, hydroxalkyl (meth)acrylates, 2-ketobutyl (meth)acrylate, N-vinylpyrrolidone, N-vinylformamide, N-vinylcaprolactam, tetrahydrofurfuryl 2-acrylate, tetrahydrofurfuryl 2-methacrylate and tetrahydrofurfuryl 2-(meth)acrylamide, and styrene, α-methylstyrene, ethylene, propylene, isobutene, butadiene and isoprene,
if desired, from 0.01 to 0.5% by weight of vinyltriethoxysilane, γ-methacryloxypropyltrimethoxysilane and vinyltris-2-methoxysilane,
up to 10% by weight of monoolefinically unsaturated mono- and/or dicarboxylic acids and/or anhydrides thereof
and, if desired, monolefinically unsaturated C₄-C₂₁-monocarboxylic acid esters (with the exception of the abovementioned esters of (meth)acrylic acid with C₂-C₈-alcohols), vinyl esters, acroleine, methacroleine, acetoacetoxyethyl acrylate, vinyl methyl ether, vinyl isobutyl ether, vinylpyridine, β-aminoethyl vinyl ether, aminopentyl vinyl ether and tert-butylaminoethyl methacrylate, and ureidomonomers and N-(meth)acryloylproline and N-acryloyl and N-methacryloyl derivatives of amino acids and N-acryloyl and N-methacryloyl derivatives of amino acid amides.
B) from 0.5 to 25% of unsaturated compounds of the formula I 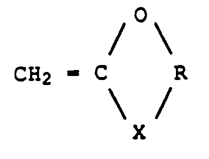 and
C) from 0.01 to 10% by weight of copolymerizable, olefinically unsaturated acetophenone and/or benzophenone derivatives containing no phenyl group having a free hydroxyl group in the ortho-position to the carbonyl group, where
X is O, S or NR¹ and
R is unsubstituted or substituted C₂- to C₆-alkylene, and
R¹ is C₁- to C₈-alkyl or phenyl.

2. A copolymer as claimed in claim 1, containing as component A), carboxyl-containing, unsaturated compounds in addition to an acrylate and/or methacrylate.

3. A copolymer as claimed in claim 2, containing, as carboxyl-containing compound, acrylic acid, methacrylic acid, maleic acid, fumaric acid or a monoester or monamide of maleic or fumaric acid.

4. A copolymer as claimed in claim 1, containing, as component A), N-vinylpyrrolidone, styrene, vinyltoluene, ethene, propene, butene or butadiene in addition to an acrylate and/or methacrylate.

5. A copolymer as claimed in claim 1, containing, as component B), 2-methylene-1,3-dioxepan or N-methyl-2-methyleneoxazolidine.

6. A copolymer as claimed in claim 1, containing, as monomer C), one or more of the compounds 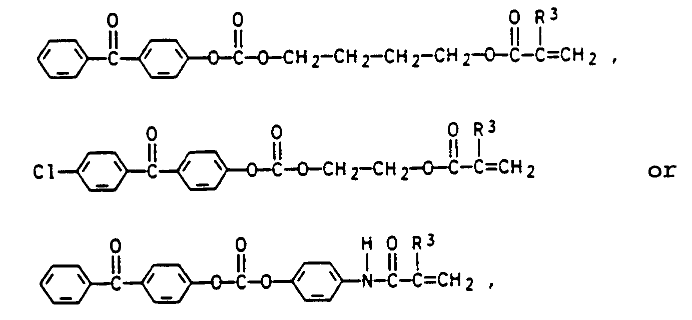 where the variable R³ is hydrogen or methyl.

7. A copolymer as claimed in claim 1, which can be crosslinked by UV irradiation in the wavelength range of from 200 to 400 nm.

8. A process for the preparation of a copolymer as claimed in claim 1, which comprises reacting the components in solution.

9. A process as claimed in claim 8, carried out in the absence of water or in the presence of water-binding agents.

10. The use of a UV-crosslinkable copolymer as claimed in claim 1 having a K value of from 25 to 65 as a hot-melt adhesive.

## Revendications

1. Copolymères réticulables par les UV, qui sont constitués de
A) 50-95, 5% en poids d'esters de l'acide (méth)acrylique avec des alcools en C₂ à C₈,
jusqu'à 35% en poids de monomères oléfiniquement insaturés, choisis parmi
les (méth)acrylamides, l'acrylonitrile, le méthacrylonitrile, le diacétonacrylamide, les (méth)acrylates d'hydroxyalkyle, le (méth)acrylate de 2-cétobutyle, la N-vinylpyrrolidone, le N-vinylformamide, le N-vinylcaprolactame, le 2-acrylate de tétrahydrofurfuryle, le 2-méthacrylate de tétrahydrofurfuryle, ou le tétrahydrofurfuryl-2-(méth)-acrylamide, ainsi que le styrène, l'α-méthylstyrène, l'éthylène, le propylène, l'isobutène, le butadiène, ou l'isoprène,
éventuellement 0,01 à 0,5% en poids de vinyltriéthoxysilane, de γ-méthacryloxypropyltriméthoxysilane et de vinyltris-2-méthoxysilane,
jusqu'à 10% en poids d'acides mono- et/ou dicarboxyliques, monoéthyléniquement insaturés et/ou leurs anhydrides et
des esters d'acides monocarboxyliques contenant de 4 à 21 atomes de carbone, éventuellement monooléfiniquement insaturés (à l'exclusion des esters susmentionnés de l'acide (méth)acrylique d'alcools en C₂ à C₈), d'esters vinyliques, d'acroléine, de méthacroléine, d'acrylate d'acétoacétoxyéthyle, d'éthervinylméthylique, d'éther vinylisobutylique, de vinylpyridine, d'éther β-aminoéthylvinylique, d'éther aminopentylvinylique, ou de méthacrylate de tert-butylaminoéthyle, ainsi que des monomères du type uréido et de N-(méth)acryloylproline ou de dérivés N-acryloyliques ou N-méthacryloyliques d'aminoacides ou de dérivés N-acryloyliques et N-méthacryloyliques d'amides d'aminoacides,
B) 0,5 à 25% en poids de composés insaturés de la formule I 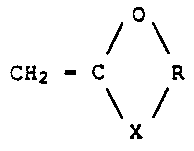 et
C) 0,01 à 10% en poids de dérivés de la benzophénone et/ou de l'acétophénone, oléfiniquement insaturés, copolymérisables, qui ne comportent pas de radical phényle avec un groupe hydroxyle libre en position ortho par rapport au radical carbonyle,
où
X représente O, S ou NR¹ et
R représente un radical alkylène en C₂ à C₆, éventuellement substitué et
R¹ représente un radical phényle ou alkyle en C₁ à C₈.

2. Copolymères suivant la revendication 1, caractérisés en ce qu'ils contiennent, à titre de composants A), outre des esters de l'acide acrylique et/ou de l'acide méthacrylique, également des composés insaturés contenant des radicaux carboxyle.

3. Copolymères suivant la revendication 2, caractérisés en ce qu'ils contiennent, à titre de composés contenant des radicaux carboxyle, de l'acide acrylique, de l'acide méthacrylique, de l'acide maléique, de l'acide fumarique, ou des monoesters ou amides de l'acide maléique ou de l'acide fumarique.

4. Copolymères suivant la revendication 1, caractérisés en ce qu'ils contiennent, à titre de composants A), outre des esters de l'acide acrylique et/ou de l'acide méthacrylique, également de la N-vinylpyrrolidone, du styrène, du vinyltoluène, de l'éthène, du propène, du butène ou du butadiène.

5. Copolymères suivant la revendication 1, caractérisés en ce qu'ils contiennent, à titre de composant B), du 2-méthylènedioxépanne-1,3 ou de la N-méthyl-2-méthylèneoxazolidine.

6. Copolymères suivant la revendication 1, caractérisés en ce qu'ils contiennent, à titre de monomères C, au moins des composés 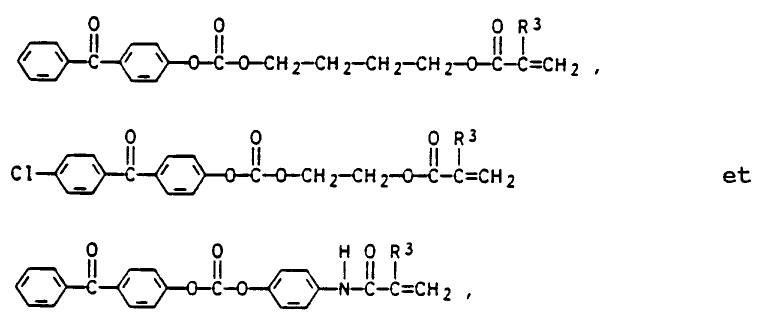 dans lesquelles les substituants R³ représentent des atomes d'hydrogène ou des radicaux méthyle.

7. Copolymères suivant la revendication 1, caractérisés en ce qu'ils sont réticulables par des rayons UV dans la plage des longueurs d'onde de 200 à 400 nm.

8. Procédé de fabrication de copolymères suivant la revendication 1, caractérisé en ce que l'on fait réagir les composants en solution.

9. Procédé suivant la revendication 8, caractérisé en ce que l'on travaille en l'absence d'eau ou en présence d'agents liant ou fixant l'eau.

10. Utilisation des copolymères réticulables par les UV suivant la revendication 1 et possédant une valeur K de 25 à 65 à titre de colles thermofusibles.
